# EUROPÄISCHE PATENTSCHRIFT

(11) **EP 2 905 502 B1**
(45) Veröffentlichungstag und Bekanntmachung des Hinweises auf die Patenterteilung: **24.08.2016**
(21) Anmeldenummer: 15153778.4
(22) Anmeldetag: 04.02.2015
(51) Int. Cl.: F16F 1/368, B60G 11/12, B60G 11/08

(54) **Blattfederanbindung**
Leaf spring connection
Liaison de ressort à lame

(30) Priorität: 05.02.2014 DE 102014101429
(43) Veröffentlichungstag der Anmeldung: 12.08.2015
(73) Patentinhaber: Benteler Automobiltechnik GmbH, 33102 Paderborn (DE)
(72) Erfinder: Drabon, Rodscha, 33154 Salzkotten (DE); Smatloch, Christian, Dr., 33100 Paderborn (DE); von der Kall, Jürgen, 33100 Paderborn (DE)
(74) Vertreter: Griepenstroh, Jörg

(56) Entgegenhaltungen:
- EP-A1- 0 044 191
- EP-A2- 0 092 949
- WO-A1-96/27507
- WO-A1-99/47373
- DE-C1- 3 613 804
- FR-A1- 2 586 624
- JP-A- S58 118 339
- JP-A- S58 142 044
- JP-A- S61 119 826
- JP-A- S61 157 843
- JP-U- S60 107 431
- NL-A- 8 600 221
- US-A- 4 707 317
- US-A1- 2012 098 229
- US-B1- 6 361 032

## Beschreibung

Die vorliegende Erfindung betrifft eine Blattfederanordnung für eine Kraftfahrzeugachse gemäß den Merkmalen im Oberbegriff von Patentanspruch 1.

Aus dem Stand der Technik ist es bekannt, Kraftfahrzeuge mit Achssystemen auszustatten, so dass die Räder des Kraftfahrzeugs federnd gelagert sind. So wirken auf das Kraftfahrzeug im Stillstand die statischen Radlasten, welche im Betrieb des Kraftfahrzeuges mit den dynamischen Radlasten überlagert werden.

Es gibt verschiedene Achskonzepte, beispielsweise eine aufgehängte Starrachse oder aber auch gefederte Einzelradaufhängungen, um die jeweilige Federung des Kraftfahrzeuges zu realisieren. Grundsätzlich wirken an einem Rad dann eine Federung und eine Dämpfung, um die statischen und dynamischen Radlasten aufzunehmen.

Insbesondere kommen mechanische Federn zum Einsatz, die beispielsweise als Runddrahtfeder ausgebildet sein können oder aber auch als Blattfeder. Damit letztere mit den Kraftfahrzeugachsbauteilen beispielsweise mit Kraftfahrzeuglenkern, insbesondere Querlenkern gekoppelt werden können, ist es aus dem Stand der Technik bekannt, dass eine Blattfeder an ihren Enden jeweils eine Aufnahme aufweist, so dass die Aufnahme selbst wiederum beispielsweise schraubtechnisch an einen entsprechenden Querlenker optional unter Eingliederung eines Zug- oder Druckstabes gekoppelt werden kann.

Die Blattfedern selbst werden heutzutage bevorzugt aus Faserverbundwerkstoffen hergestellt, wohingegen die Aufnahmen zumeist aus einem metallischen Werkstoff ausgebildet sind. Nunmehr wird die Blattfeder an ihren Enden mit einer entsprechenden Aufnahme gekoppelt, wobei aus dem Stand der Technik hier entweder eine formschlüssige Koppelung derart bekannt ist, dass die Blattfeder durchbohrt wird und dann mittels Schraubverbindung die Aufnahme mit der Blattfeder gekoppelt wird oder alternativ die Aufnahme beim Herstellungsvorgang in die Blattfeder mit einlaminiert wird. Hieraus ergeben sich jedoch zwei Nachteile. Zum einen ist bei Herstellung einer formschlüssigen Verbindung das insbesondere mechanische Anbohren der Blattfeder schädigend in Bezug auf die damit erreichbare Dauerhaltbarkeit. Zum anderen gehen bei dem gleichzeitigen Einlaminieren einer Aufnahme erhöhte Herstellungskosten einher.

So ist beispielsweise durch die JP S61 119826 A eine Blattfederanordnung bekannt, bei der sich eine Aufnahme auf der Unterseite der Blattfeder an die Blattfeder koppeln lässt. Die hier aufgezeigte Ausgestaltung besteht notwendigerweise aus der Kombination von Bolzen sowie der Aushärtung des Harzes nach erfolgter Koppelung während der Herstellung. Hierdurch fehlt der zuvor beschriebene nachteilige Effekt des Eingreifens in die Blattfeder weiterhin notwendig.

Weitere alternative Ausgestaltungen, bei denen die Blattfeder mit der Aufnahme entweder über eine einseitig umschließende Aufnahme oder aber eine Schraubverbindung mit der Blattfeder realisiert ist, sind zudem durch die US 2012/0098229 A, die JP S61 157843 A sowie die DE 36 13 804 C1 bekannt.

Aufgabe der vorliegenden Erfindung ist es daher, eine Blattfeder mit einer Anbindung aufzuzeigen, die zum einen eine hohe mechanische Dauerhaltbarkeit bei gleichzeitig günstiger und technisch einfacher Produzierbarkeit realisiert.

Die zuvor genannte Aufgabe wird erfindungsgemäß mit einer Blattfederanordnung für eine Kraftfahrzeugachse gemäß den Merkmalen im Patentanspruch 1 gelöst.

Vorteilhafte Ausführungsvarianten der vorliegenden Erfindung sind Gegenstand der abhängigen Patentansprüche.

Die Blattfederanordnung für eine Kraftfahrzeugachse weist eine Blattfeder aus einem Faserverbundwerkstoff auf, welche an ihren Enden mit Aufnahmen zur Anbindung an weitere Achsbauteile gekoppelt ist, wobei die Blattfeder an ihren Enden zumindest an einer Unterseite flächig ausgebildet ist und dort eine Fügefläche aufweist und die Aufnahme flächig an der Unterseite im Bereich der Fügefläche anliegt, wobei die Aufnahme eine Öffnung zur Aufnahme eines Metalllagers oder eines Schraubbolzens aufweist.

Die Blattfederanordnung zeichnet sich erfindungsgemäß dadurch aus, dass die Aufnahme eine Fügefläche aufweist, welche mit der Fügefläche der Blattfeder verklebt ist, wobei bezogen auf die Kraftfahrzeugvertikalrichtung gegenüber der Fügefläche eine Stützschulter überstehend ist, wobei die Stützschulter an dem stirnseitigen Ende der Blattfeder zumindest teilweise zur Anlage kommt und die Öffnung unterhalb der Fügefläche angeordnet ist.

Die Blattfeder selbst ist bevorzugt insbesondere als Querblattfeder ausgebildet. Sie ist aus einem Faserverbundwerkstoff ausgebildet, wobei hier insbesondere Glasfaserverbundwerkstoffe eingesetzt werden, um besonders bevorzugt eine mehrlagige Querblattfeder bereitzustellen. Erfindungsgemäß ist nunmehr vorgesehen, dass die Blattfeder nicht an ihren Enden mechanisch bearbeitet wird, beispielsweise durch eine Bohrung und dann eine entsprechende Aufnahme mit dem Ende schraubtechnisch verbunden wird, sondern eine entsprechende Aufnahme wird mit dem Ende der Querblattfeder verklebt. Hierbei kommen besonders bevorzugt ein einkomponentiger oder aber ein zweikomponentiger Klebstoff zum Einsatz. Im Rahmen der Erfindung ist der Kleber insbesondere thermisch aktivierbar, wobei weiterhin besonders bevorzugt auch beispielsweise ein anaerob aushärtbarer Klebstoff eingesetzt wird. Die Aufnahme selbst ist bevorzugt aus metallischem Werkstoff ausgebildet, insbesondere aus einer Stahllegierung oder aus einer Leichtmetalllegierung.

Die Aufnahme selbst weist einen flächigen Fügebereich auf, der korrespondierend an einem flächigen Fügebereich an einem Ende der Blattfeder unter Eingliederung eines Klebstoffes zur Anlage kommt. Die zwei Fügeflächen von Blattfeder und Aufnahme werden somit miteinander gekoppelt. Die Aufnahme weist dann weiterhin eine Ausnehmung auf, die sich im Wesentlichen orthogonal zur Fügefläche erstreckt und insbesondere als Lageraufnahmeöffnung oder aber als Bolzenaufnahmeöffnung eingesetzt wird. Hier ist es dann möglich die Aufnahme mit einem weiteren Achsbauteil beispielsweise direkt mit einem Querlenker oder aber über einen Zugstab oder Druckstab mit einem entsprechenden Lenker der Radaufhängung zu koppeln.

Die Blattfeder ist an ihren Enden zumindest an einer auf die Einbaurichtung bezogenen Unterseite flächig ausgebildet, wobei insbesondere an der flächigen Unterseite die Fügefläche blattfederseitig ausgebildet ist. Die Aufnahme liegt dann wiederum mit ihrer Fügefläche flächig an der Unterseite bzw. der blattfederseitigen Fügefläche unter Eingliederung eines entsprechenden Klebstoffes an.

Ein stirnseitiges Ende der Blattfeder ist von der Aufnahme bevorzugt zumindest teilweise seitlich umgriffen bzw. umfasst, wobei insbesondere zwischen stirnseitigem Ende der Blattfeder und der Aufnahme weiterhin ein Klebstoff angeordnet ist.

Die Klebeverbindung ist insbesondere an dem Ende derart wirkungsvoll ausgebildet, wobei die Federungsbewegung und somit Formänderungen der Blattfeder im Innen- oder Mittelbereich vollzogen werden, wohingegen die Enden der Blattfeder zwar eine Bewegung in kinematischer Bewegungsrichtung ausüben, jedoch keine Bewegung in sich stattfindet. Eine Mikrorissbildung gerade in der Klebefläche wird somit erfindungsgemäß vermieden.

Damit gleichzeitig eine entsprechende Dauerhaltbarkeit gegeben ist, ist die Aufnahme weiterhin mit einem Zugstab oder einem Druckstab gekoppelt, wobei durch den Zugstab oder den Druckstab eine Kraft von der Aufnahme in Richtung zu dem Ende der Blattfeder selbst aufgebracht ist. Somit erfolgt eine Beaufschlagung insbesondere der Klebefläche maßgeblich mit einer derartigen Druck- oder Presskraft, dass eine scherende oder abziehende Bewegung zwischen Ende der Querblattfeder und Aufnahme vermieden ist.

Somit wirkt sich die Klebung auf eine kostengünstige und einfache Produzierbarkeit sowie insbesondere weiterhin die hauptsächlich übertragende Kraft in Druckrichtung auf eine besonders hohe Dauerhaltbarkeit der erfindungsgemäßen Blattfederanordnung mit geklebter Aufnahme aus.

Weitere Vorteile, Merkmale, Eigenschaften und Aspekte der vorliegenden Erfindung werden in der nachfolgenden Beschreibung erläutert. Bevorzugte Ausführungsvarianten werden in den schematischen Figuren dargestellt. Diese dienen dem einfachen Verständnis der Erfindung. Es zeigen:
- Figur 1:: eine aus dem Stand der Technik bekannte Querblattfeder mit geschraubter Außenlagerung,
- Figur 2a und b:: eine erfindungsgemäß hergestellte Blattfederanordnung mit geklebter Aufnahme und
- Figur 3a und b:: die erfindungsgemäße Blattfederanordnung mit Zugstab und Druckstabanbindung.

In den Figuren werden für gleiche oder ähnliche Bauteile dieselben Bezugszeichen verwendet, auch wenn eine wiederholte Beschreibung aus Vereinfachungsgründen entfällt.

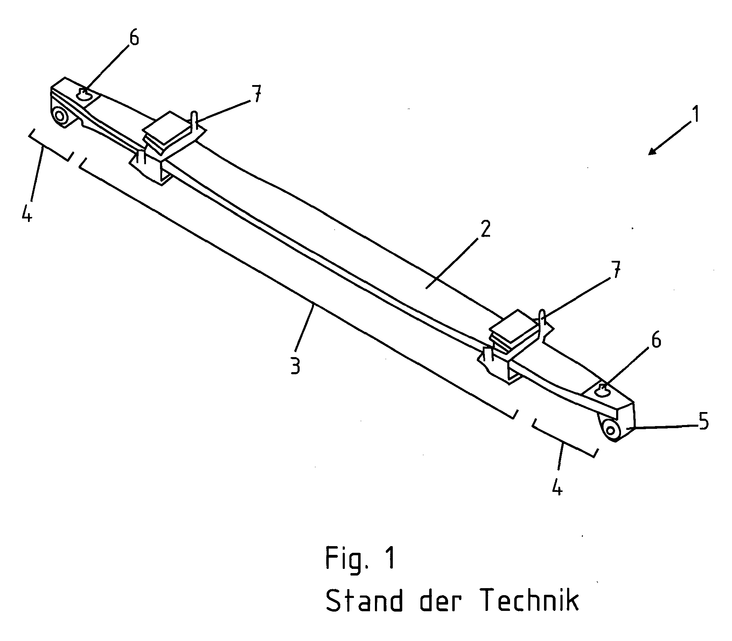

Figur 1 zeigt eine aus dem Stand der Technik bekannte Blattfederanordnung 1, wobei eine Blattfeder als Querblattfeder 2 ausgebildet ist, die einen Mittelbereich 3 sowie zwei jeweilige Enden 4 aufweist. Aus dem Stand der Technik ist es bekannt, dass eine entsprechende Aufnahme 5 mit dem Ende 4 der Querblattfeder 2 gekoppelt ist, wobei hierzu dann die Querblattfeder 2 im Ende 4 durchbohrt ist und mittels eines Schraubbolzens 6 das Ende 4 sowie die Aufnahme 5 formschlüssig gekoppelt sind. Ferner sind im Mittelbereich 3 zusätzliche Anbindungen 7 vorgesehen, um die Querblattfeder 2 mit einer hier näher dargestellten Kraftfahrzeugkarosserie oder aber einem Hilfsrahmen zu koppeln.

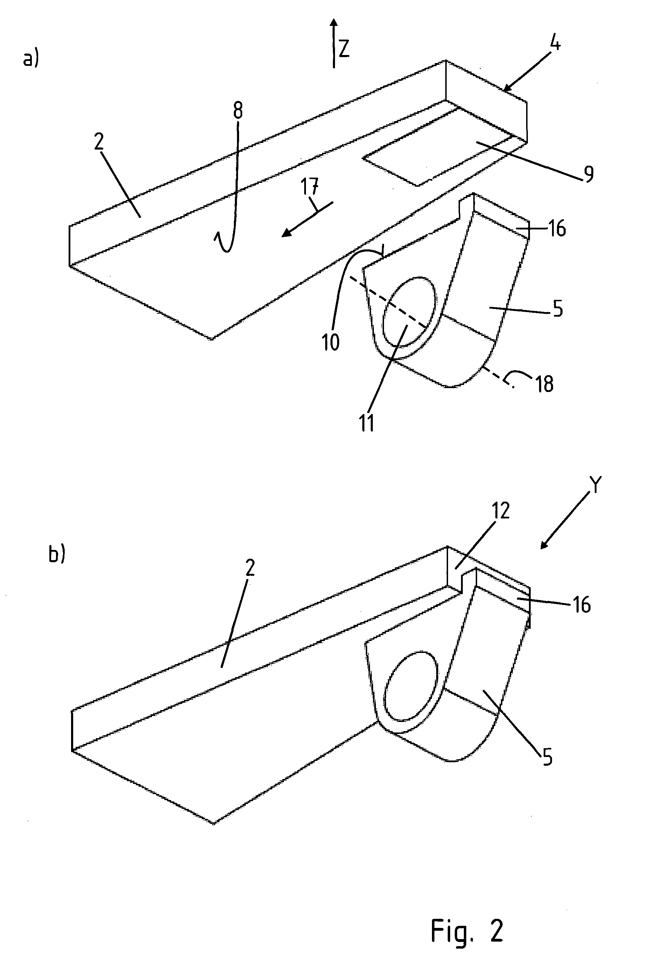

Erfindungsgemäß ist nunmehr gemäß Figur 2a vorgesehen, dass das Ende 4 der Querblattfeder 2 an einer Unterseite 8 eine flächige Fügefläche 9 aufweist, die mit einer korrespondierenden Fügefläche 10 der Aufnahme 5 unter Eingliederung eines Klebstoffes miteinander verklebt wird. Die Aufnahme 5 selbst weist dann eine Öffnung 11 auf, wobei die Öffnung 11 bezogen auf die Kraftfahrzeug Z-Richtung unterhalb der Fügefläche 9 angeordnet ist. Die Öffnung 11 erstreckt sich mit ihrer Längsachse 18 orthogonal zu einer Längsrichtung 17 der Querblattfeder 2 und zur Kraftfahrzeug Z-Richtung erstreckt. Die Unterseite 8 ist dabei bezogen auf die Kraftfahrzeug Z-Richtung nach unten zeigend im Rahmen der Erfindung definiert. In die Öffnungen 11 können beispielsweise ein Lager, insbesondere Metalllager oder aber auch ein Schraubbolzen eingeführt werden. Ferner ist dargestellt in Figur 2b, dass die Aufnahme 5 bevorzugt ein stirnseitiges Ende 12 der Querblattfeder 2 mit einer Stützschulter 16 zumindest teilweise umfasst, so dass die Stützschulter 16 an dem stirnseitigen Ende 12 formschlüssig anliegt, insbesondere unter Eingliederung eines Klebstoffes. Durch die Stützschulter 16 erfolgt dabei während des Kopplungsvorganges von Aufnahme 5 und Querblattfeder 2 eine Eigenzentrierung bezogen auf die Längsrichtung 17 der Querblattfeder 2. Im späteren Betrieb erfolgt dann eine Auslenkung der Querblattfeder 2 in Kraftfahrzeug Z-Richtung, welche mit einer Längenänderung in Längsrichtung 17 der Querblattfeder 2 einhergeht. Die auftretenden Kräfte bei Längenänderung in Druckrichtung werden dann zusätzlich durch die Stützschulter 16 kompensiert und die auftretenden Kräfte bei Längenänderung in Zugrichtung werden zusätzlich durch die Verklebung von stirnseitigem Ende 12 mit der Stützschulter 16. Die Stützschulter 16 liegt dabei bevorzugt formschlüssig nur an einem Teil des stirnseitigen Endes 12 an. Insbesondere überdeckt die Stützschulter 16 10 % bis 80 %, bevorzugt 20 % bis 60% und insbesondere 25 % bis 50% der Fläche des stirnseitigen Endes 12 bezogen auf die von der Stützschulter 16 überdeckte Fläche des stirnseitigen Endes 12. Insbesondere ist das Ende 4 der Querblattfeder 2 nicht vollständig von der Aufnahme 5 ummantelt und die Aufnahme 5 umgreift nicht das Ende 4 der Querblattfeder 2, so dass die Aufnahme 5 nur an der Unterseite 8 und zumindest teilweise am stirnseitigen Ende 12 anliegt und bevorzugt mit diesem verklebt ist. Ebenfalls sind die Seitenflächen der Querblattfeder 2 nicht umgriffen.

Auch hier ist besonders bevorzugt Klebstoff zwischen Aufnahme 5 und dem stirnseitigen Ende 12 eingegliedert. Bevorzugt erfolgt hierdurch eine Eigenzentrierung der Aufnahme 5 an der Querblattfeder 2 sowie ein zusätzlicher Halt, insbesondere in Kraftfahrzeug Y-Richtung.

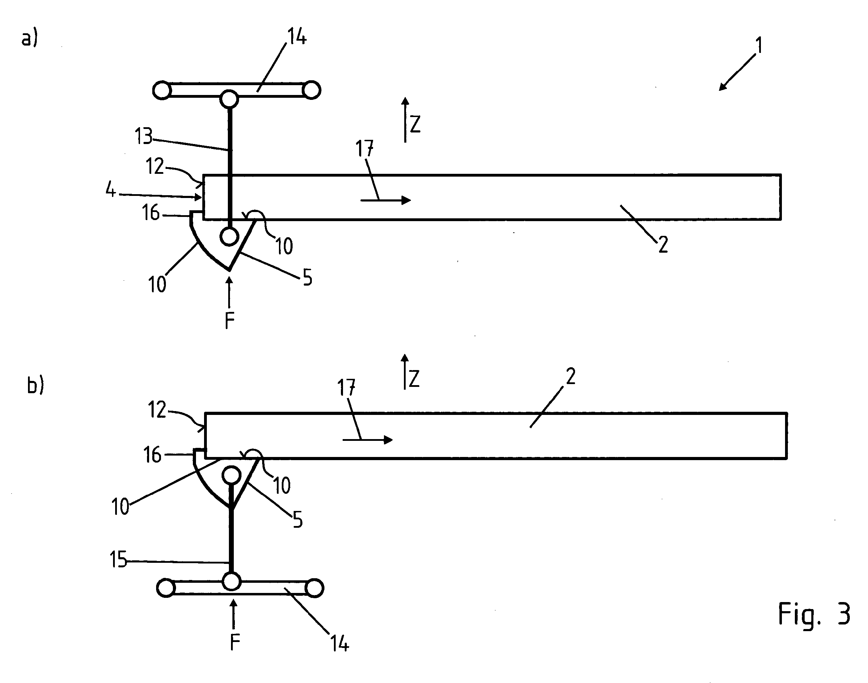

Figur 3a und b zeigen dann eine entsprechende Einbausituation der erfindungsgemäßen Blattfederanordnung 1. In Figur 3a ist zu erkennen, dass die Querblattfeder 2 in ihrem Ende 4 mit der erfindungsgemäßen Aufnahme 5 gekoppelt ist und über einen Zugstab 13 mit einem oberen Lenker 14, beispielsweise als Querlenker ausgebildet, in kinematischer Koppelung steht. Wird nunmehr eine Kraft F durch den Lenker 14 aufgebracht, so wird diese maßgeblich auf die Bildrichtung nach oben durch den Zugstab 13 übertragen und es erfolgt eine Pressung in der geklebten Fügefläche 10 zwischen Ende 4 der Querblattfeder 2 und Aufnahme 5. Der Hauptbelastungsfall sowohl für statische als auch dynamische Radlasten ist somit in Wirkrichtung der Kraft F auftretend, weshalb maßgeblich eine hier dargestellte Zugbelastung über den Zugstab 13 übertragen wird, diegleichzeitig eine Pressung in der Fügefläche 10 erzeugt.

Demgegenüber zeigt die Anordnung gemäß Figur 3b mit einem unterem Lenker 14 in Form, beispielsweise eines Querlenkers, eine Koppelung mittels Druckstab 15, so dass eine über den Lenker 14 aufgebrachte Kraft F maßgeblich in Druckrichtung des Druckstabes 15 aufgebracht wird, was wiederum zu einer Pressung in der Fügefläche 10 führt. Auch hier erfolgt die Hauptkrafteinleitung durch sowohl statische als auch dynamische Radlasten maßgeblich in Druckrichtung des Druckstabes 15, so dass gerade durch die Klebung eine hinreichende Festigkeit und Dauerhaltbarkeit zwischen Querblattfeder 2 und Aufnahme 5 bei einfacher Produzierbarkeit hergestellt ist.

### Bezugszeichen:

1 - Blattfederanordnung
2 - Querblattfeder
3 - Mittelbereich
4 - Ende zu 2
5 - Aufnahme
6 - Schraubbolzen
7 - Anbindung
8 - Unterseite zu 2
9 - flächige Fügefläche zu 2
10- Fügefläche zu 5
11 - Öffnung
12- stirnseitiges Ende zu 2
13- Zugstab
14- Lenker
15 - Druckstab
16- Stützschulter
17- Längsrichtung
18- Längsachse
F- Kraft

## Patentansprüche

1. Blattfederanordnung (1) für eine Kraftfahrzeugachse, aufweisend eine Blattfeder aus einem Faserverbundwerkstoff, welche an ihren Enden (4) mit Aufnahmen (5) zur Anbindung an weitere Achsbauteile gekoppelt ist, wobei die Blattfeder an ihren Enden (4) zumindest an einer Unterseite (8) flächig ausgebildet ist und dort eine Fügefläche (9) aufweist und die Aufnahme (5) flächig an der Unterseite (8) im Bereich der Fügefläche (9) anliegt, wobei die Aufnahme (5) eine Öffnung (11) zur Aufnahme eines Metalllagers oder eines Schraubbolzens aufweist, **dadurch gekennzeichnet, dass** die Aufnahme (5) eine Fügefläche (10) aufweist, welche mit der Fügefläche (9) der Blattfeder verklebt ist, wobei bezogen auf die Kraftfahrzeugvertikalrichtung gegenüber der Fügefläche (10) eine Stützschulter (16) überstehend ist, wobei die Stützschulter (16) an dem stirnseitigen Ende (12) der Blattfeder zumindest teilweise zur Anlage kommt und die Öffnung (11) unterhalb der Fügefläche (9) angeordnet ist.

2. Blattfederanordnung nach Anspruch 1, **dadurch gekennzeichnet, dass** die Aufnahme (5) aus einem metallischen Werkstoff ausgebildet ist.

3. Blattfederanordnung nach einem der Ansprüche 1 oder 2, **dadurch gekennzeichnet, dass** die Blattfeder als Querblattfeder (2) ausgebildet ist.

4. Blattfederanordnung nach einem der Ansprüche 1 bis 3, **dadurch gekennzeichnet, dass** die Aufnahme (5) mit einem Zugstab (13) oder einem Druckstab (15) gekoppelt ist, wobei durch den Zugstab (13) oder den Druckstab (15) eine Kraft (F) von der Aufnahme (5) in Richtung zu dem Ende (4) der Blattfeder aufgebracht ist.

5. Blattfederanordnung nach Anspruch 1, **dadurch gekennzeichnet, dass** eine Anlagefläche der Stützschulter (16) mit dem stirnseitigen Ende (12) verklebt ist.

## Claims

1. Leaf spring arrangement (1) for a motor vehicle axle, comprising a leaf spring made of a fiber composite, the leaf spring being coupled at its ends (4) to mounts (5) for attachment onto further axle components, wherein the leaf spring has at its ends (4) at least one flat underside (8) to provide a joining surface (9), and the mount (5) lies flat against the underside (8) in the area of the joining surface (9), wherein the mount (5) comprises an opening (11) for receiving a metallic bearing or screw bolt, **characterized in that** the mount (5) comprises a joining surface (10) bonded by an adhesive with the joining surface (9) of the leaf spring, wherein in relation to a vertical direction of a motor vehicle a support shoulder (16) protrudes relative to the joining surface (10), wherein the support shoulder (16) abuts at least partly at a front end (12) of the leaf spring and the opening (11) is positioned underneath the joining surface (9).

2. Leaf spring arrangement according to claim 1, **characterized in that** the mount (5) is made of a metallic material.

3. Leaf spring arrangement according to any of claims 1 or 2, **characterized in that** the leaf spring is configured as a transverse leaf spring (2).

4. Leaf spring arrangement according to any of claims 1 to 3, **characterized in that** the mount (5) is coupled to a tie rod (13) or pressure bar (15), wherein a force (F) is exerted by the tie rod (13) or the pressure bar (15) from the mount (5) in a direction of the end (4) of the leaf spring.

5. Leaf spring arrangement according to claim 1, **characterized in that** a contact surface of the support shoulder (16) is bonded by an adhesive with the front end (12).

## Revendications

1. Dispositif de ressort à lames (1) pour un essieu de véhicule automobile, comportant un ressort à lames en un matériau composite renforcé par des fibres qui est couplé par ses extrémités (4) à des logements (5) pour la liaison à d'autres pièces d'essieu, le ressort à lames étant conçu plat à ses extrémités (4) au moins sur une face inférieure (8) et comportant là une surface d'assemblage (9) et le logement (5) s'appuyant par sa surface contre la face inférieure (8) dans la zone de la surface d'assemblage (9), le logement (5) comportant une ouverture (11) pour loger un palier métallique ou un boulon fileté, **caractérisé en ce que** le logement (5) comporte une surface d'assemblage (10) qui est collée à la surface d'assemblage (9) du ressort à lames, un épaulement de soutien (16) dépassant de la surface d'assemblage (10) dans la direction verticale du véhicule automobile, l'épaulement de soutien (16) venant au moins partiellement en appui contre l'extrémité frontale (12) du ressort à lames et l'ouverture (11) étant agencée en dessous de la surface d'assemblage (9).

2. Dispositif de ressort à lames selon la revendication 1, **caractérisé en ce que** le logement (5) est conçu en un matériau métallique.

3. Dispositif de ressort à lames selon l'une des revendications 1 ou 2, **caractérisé en ce que** le ressort à lames est conçu comme un ressort à lames transversal (2) .

4. Dispositif de ressort à lames selon l'une des revendications 1 à 3, **caractérisé en ce que** le logement (5) est couplé à une barre de traction (13) ou à une barre de pression (15), une force (F) étant appliquée via la barre de traction (13) ou la barre de pression (15) par le logement (5) en direction de l'extrémité (4) du ressort à lames.

5. Dispositif de ressort à lames selon la revendication 1, **caractérisé en ce qu'**une surface d'appui de l'épaulement de soutien (16) est collée à l'extrémité frontale (12).
